# EUROPEAN PATENT SPECIFICATION

(11) **EP 3 385 652 B1**
(45) Date of publication and mention of the grant of the patent: **18.10.2023**
(21) Application number: 18165672.9
(22) Date of filing: 04.04.2018
(51) Int. Cl.: F28F 1/02, F28F 1/08, F28F 1/16, F28F 1/12, F28F 21/08, F02C 7/143, B23P 15/00, B23P 15/26

(54) **METHODS OF FORMING A HEAT EXCHANGER**
VERFAHREN ZUR HERSTELLUNG EINES WÄRMETAUSCHERS
PROCÉDÉS DE FORMATION D'UN ÉCHANGEUR DE CHALEUR

(30) Priority: 04.04.2017 US 201715478266
(43) Date of publication of application: 10.10.2018
(73) Proprietor: Unison Industries LLC, Jacksonville, FL 32256 (US)
(72) Inventor: YANG, Yanzhe, Jacksonville, FL Florida 32256 (US); TAJIRI, Gordon, Jacksonville, FL Florida 32256 (US); STORAGE, Michael Ralph, Jacksonville, FL Florida 32256 (US)
(74) Representative: Openshaw & Co.

(56) References cited:
- DE-A1-102013 109 156
- US-A- 5 075 966
- US-A- 5 249 357
- US-A1- 2010 075 111
- US-A1- 2015 135 726

## Description

### BACKGROUND

Contemporary engines used in aircraft can produce substantial amounts of heat needing to be transferred away from the engine. Heat exchangers provide a way to transfer heat away from such engines. For example, one type of heat exchanger that may be used is an annular surface cooler that is mounted to an aft fan casing. Integral fins formed from parent material in the heat exchanger can have a significantly higher heat transfer coefficient versus fins which may be brazed or otherwise attached to the parent material. The fins of such heat exchangers provide large surface areas beneficial for transferring heat to the surrounding air. In addition, thermal transfer enhancing features may be provided within the heat exchanger.

US 5 249 357 describes a process for making a combustion chamber for a rocket engine.

US 2010/075111 discloses subsurface cooling channels with internal structures and no corners near seams between the substrate and its coating, wherein the channels are formed with the deposition of a sacrificial material covered by spray coating.

### BRIEF DESCRIPTION

The present invention concerns a method of forming a heat exchanger according to claim 1.

### BRIEF DESCRIPTION OF THE DRAWINGS

In the drawings:
FIG. 1 is a perspective view of a typical heat exchanger portion according to the prior art.
FIG. 2 illustrates a partially cutaway view of a turbine engine assembly with a surface cooler in accordance with various aspects described herein.
FIG. 3 is a perspective view of an aft portion of a fan casing in the turbine engine assembly of FIG. 2.
FIG. 4 is an exploded perspective view of the fan casing of FIG. 3 including a metal body which can be used in forming the surface cooler of FIG. 2.
FIG. 5 is a perspective view of the metal body of FIG. 4.
FIG. 6 is an axial cross-sectional view of the metal body of FIG. 4 taken along the line 6-6.
FIG. 7 illustrates the metal body of FIG. 6 with a set of partially-defined cooling passages.
FIG. 8 illustrates the metal body of FIG. 7 with the addition of sacrificial material.
FIG. 9 illustrates the metal body of FIG. 8 with the addition of a top metal wall.
FIG. 10 illustrates the metal body of FIG. 9 after removing the sacrificial material.
FIG. 11 is a perspective view of a portion of the surface cooler of FIG. 2 according to an example not covered by the claims.
FIG. 12 is a perspective view of a portion of the surface cooler of FIG. 2 according to an embodiment covered by the claims.
FIG. 13 is a flowchart illustrating a method of forming the surface cooler of FIG. 2.

### DETAILED DESCRIPTION

Jet engines, such as turbine engines, pose unique thermal management challenges and in cases where compressor bleed air is used within the heat exchanger, the thermal management challenges are quite extreme. In such a situation, a surface cooler, which is a type of heat exchanger, can be designed to accept a flow of compressor bleed air through a series of tubes to transfer the heat from the compressor bleed air through the heat exchanger to a surrounding environment. The surrounding environment can include a cooler air flow, such as that from fan bypass air which is provided over the top of the heat exchanger. It will be understood that the present disclosure is not limited to the environment of a turbine engine and may have general applicability in non-aircraft applications, such as other mobile applications and non-mobile industrial, commercial, and residential applications as well.

As used herein, the term "forward" or "upstream" refers to moving in a direction toward the engine inlet, or a component being relatively closer to the engine inlet as compared to another component. The term "aft" or "downstream" used in conjunction with "forward" or "upstream" refers to a direction toward the rear or outlet of the engine or being relatively closer to the engine outlet as compared to another component. Additionally, as used herein, the terms "radial" or "radially" refer to a dimension extending between a center longitudinal axis of the engine and an outer engine circumference. Further, "a set" as used herein can include any number including only one.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of the disclosure. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

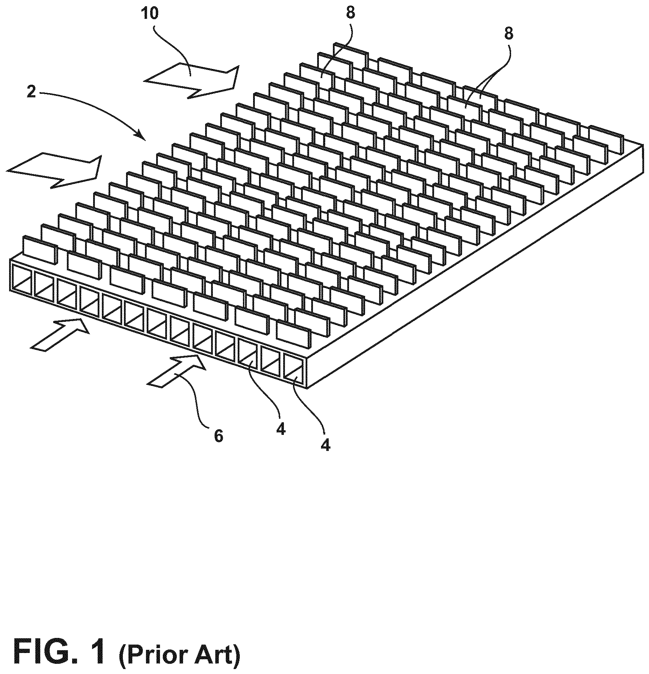

FIG. 1 illustrates a schematic example of a typical heat exchanger portion 2. The heat exchanger portion 2 has internal passageways or conduits 4, which may be used for carrying fluid 6 to be cooled and fins 8 over which cooling air 10 may be passed. Heat exchangers are often made from aluminum alloys; in higher-temperature applications where aluminum may not be suitable, a more durable material can be used including, but not limited to, nickel. The mechanical strength at high temperature can accompany an increase in material hardness. In such an instance, traditional manufacturing methods such as extrusion are not useable to form portions of the heat exchanger. In addition, joints that are traditionally used to form conduits 4 can be unsuitable for high temperature or high pressure applications due to material stability concerns.

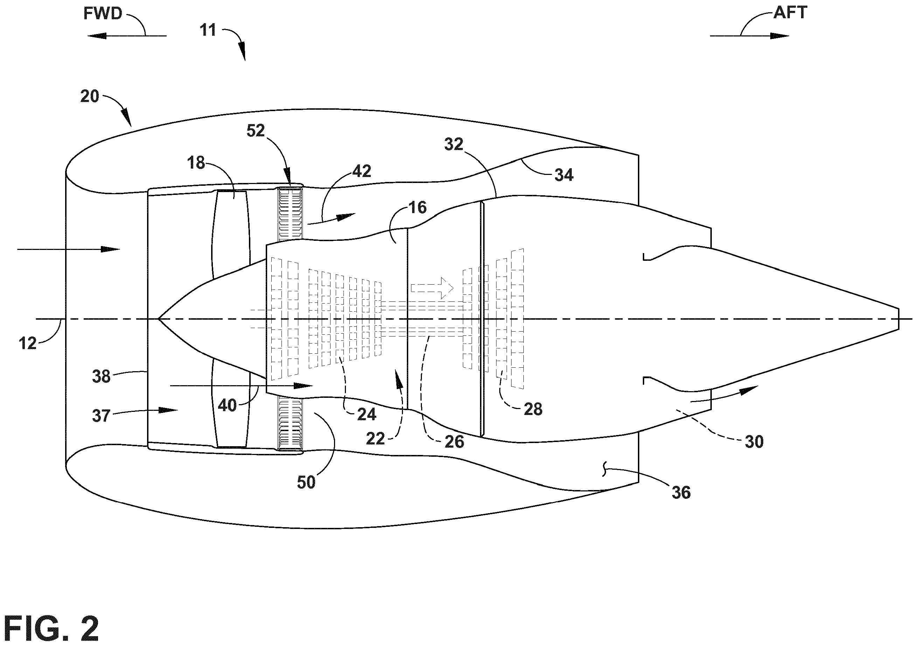

FIG. 2 illustrates an exemplary turbine engine assembly 11 having a longitudinal axis 12. A turbine engine 16, a fan assembly 18, and a nacelle 20 can be included in the turbine engine assembly 11. The turbine engine 16 can include an engine core 22 having at least one compressor 24, a combustion section 26, at least one turbine 28, and an exhaust 30. An inner cowl 32 radially surrounds the engine core 22.

Portions of the nacelle 20 have been cut away for clarity. The nacelle 20 surrounds the turbine engine 16 including the inner cowl 32. In this manner, the nacelle 20 forms an outer cowl 34 radially surrounding the inner cowl 32. The outer cowl 34 is spaced from the inner cowl 32 to form an annular passage 36 between the inner cowl 32 and the outer cowl 34. The annular passage 36 characterizes, forms, or otherwise defines a nozzle and a generally forward-to-aft bypass airflow path. A fan casing assembly 37 having an annular forward casing 38 and an annular aft casing 52 can form a portion of the outer cowl 34 formed by the nacelle 20 or can be suspended from portions of the nacelle 20 via struts (not shown).

In operation, air flows through the fan assembly 18 and a first portion 40 of the airflow is channeled through compressor(s) 24 wherein the airflow is further compressed and delivered to the combustion section 26. Hot products of combustion (not shown) from the combustion section 26 are utilized to drive turbine(s) 28 and thus produce engine thrust. The annular passage 36 is utilized to bypass a second portion 42 of the airflow discharged from fan assembly 18 around engine core 22.

The turbine engine assembly 11 can pose unique thermal management challenges and a heat exchanger or surface cooler, illustrated herein as an annular surface cooler 50, can be attached to the turbine engine assembly 11 to aid in the dissipation of heat.

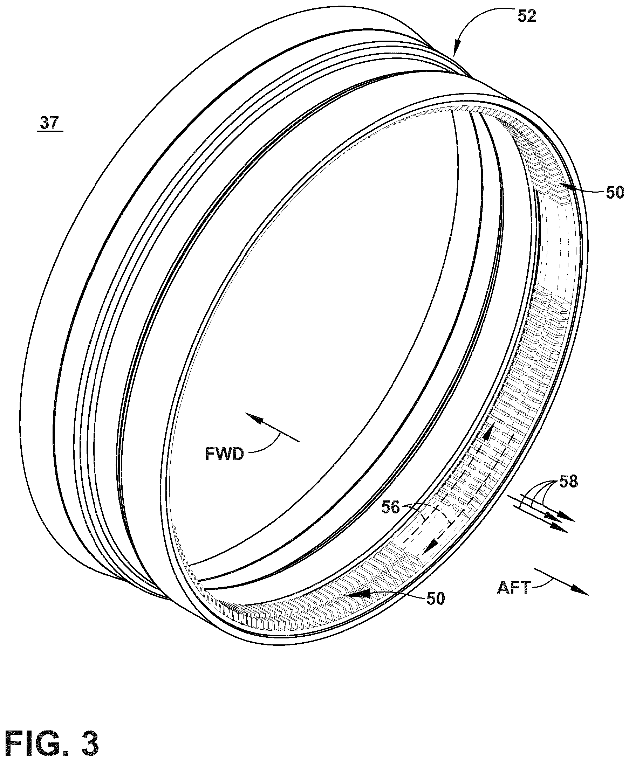

Turning to FIG. 3, the surface cooler 50 can be operably coupled to a peripheral wall 54 of the annular aft casing 52 and can include, but is not limited to, an air-cooled heat exchanger that is positioned within the annular passage 36 (FIG. 2). While the surface cooler 50 has been illustrated as being downstream of the fan assembly 18 (FIG. 2) it is also contemplated that the surface cooler 50 can alternatively be upstream from fan assembly 18. As such, it will be understood that the surface cooler 50 can be positioned anywhere along the axial length of the annular passage 36.

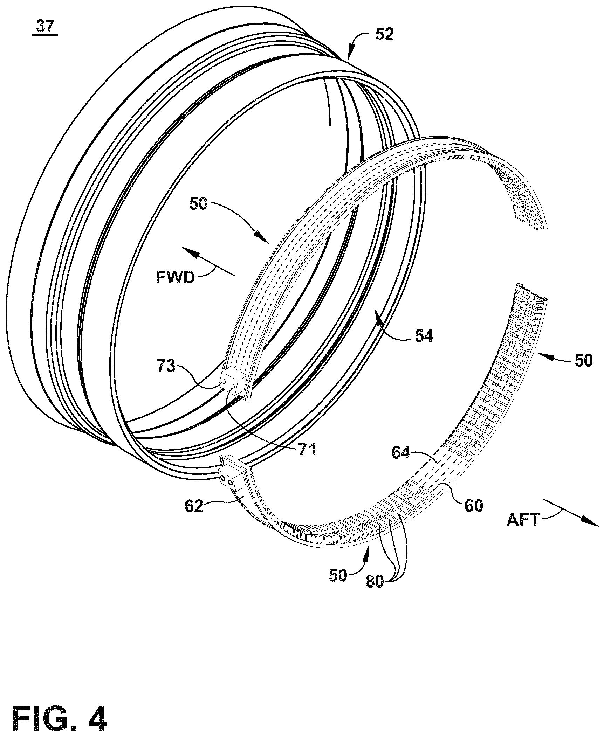

The surface cooler 50 can include a circumferential and axial profile that is substantially similar to the circumferential and axial profile of the peripheral wall 54, and can cover any portion of the circumference of the peripheral wall 54 as shown in FIG. 4. The annular surface cooler 50 can also include a metal body 60 having a first surface 62 and a second surface 64, and which can be made from a nickel alloy in a preferred embodiment. A set of internal fluid cooling passages 70 having an inlet A and an outlet B are included in the metal body 60, as well as a set of fins 80 spaced circumferentially along the second surface 64. When assembled, the first surface 62 is configured to confront the peripheral wall 54 of the annular aft casing 52 as shown. It will be understood that a set of surface coolers 50 can be utilized to cool a single turbine engine assembly 11.

During operation, arrows 56 (FIG. 3) illustrate exemplary fluid flow through the cooling passages 70 within the surface cooler 50, and arrows 58 illustrate airflow that interacts with the fins 80. Heat can be transferred from the fluid within through conduction to the remainder of the surface cooler 50 including the fins 80. Heat can then be dispersed via convection to the airflow 58.

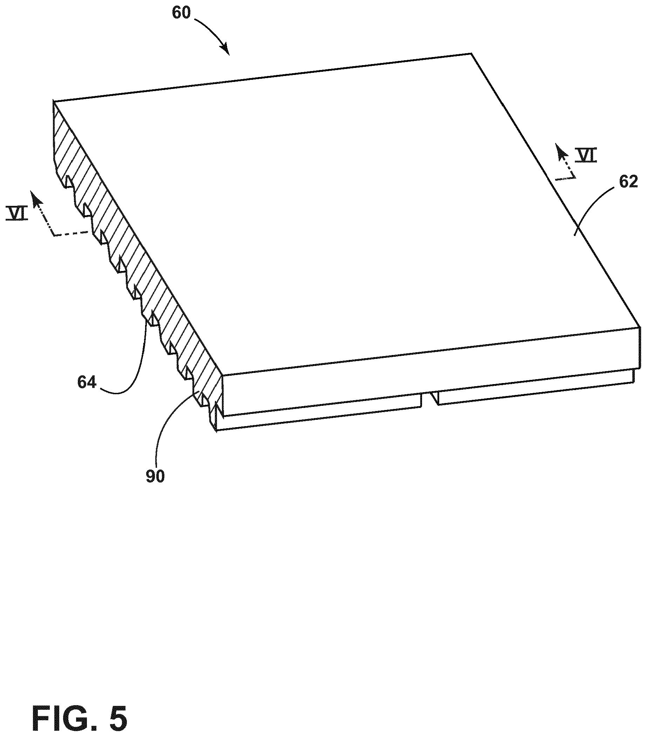

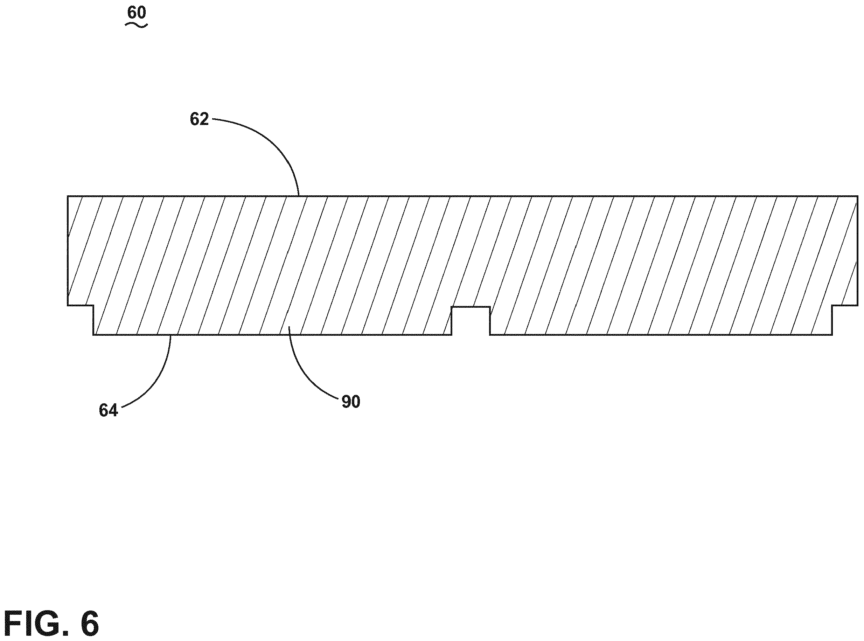

Regardless of where the heat exchanger or surface cooler 50 is utilized, it will be understood that there may be a need for a more durable material to form the heat exchanger including that of nickel. It will now be described how a metal heat exchanger can be formed that can withstand higher temperatures and pressures. FIG. 5 illustrates that the process can begin with a metal body 60, illustrated with a plurality of ridges 90 that can be used to create the fins 80 (FIG. 4). In FIG. 6, the metal body 60 is shown in cross-section taken along the line 6-6 from FIG. 5, and can be one continuous piece including the first surface 62, second surface 64, and ridges 90.

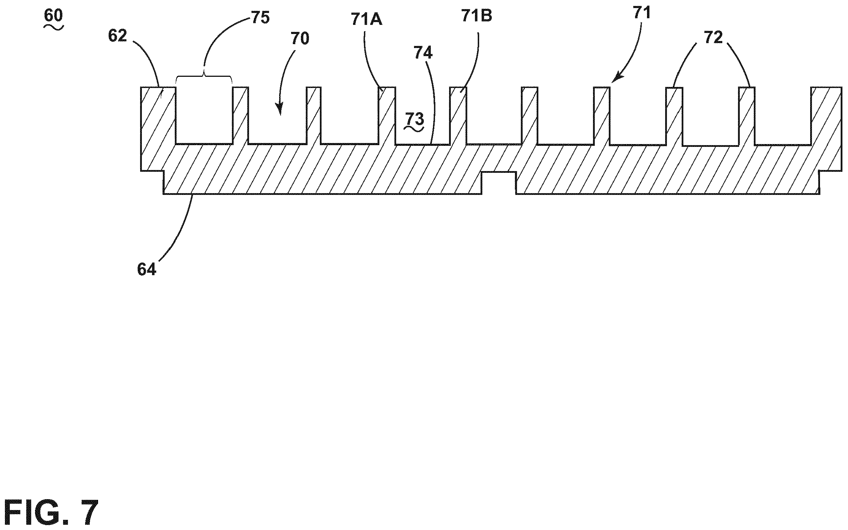

FIG. 7 shows the metal body 60 after forming a set of walls 71 with ends 72 within the body 60. More specifically a first wall 71A and adjacent second wall 71B can be included in the set of walls and can define a cavity 73 having an inner surface 74. Two of the adjacent set of walls 71 can partially define the set of fluid cooling passages 70 having open faces 75 between the wall ends 72. Any suitable method may be used to form the walls 71, such as machining into the first surface 62 of the metal body 60 in a non-limiting example.

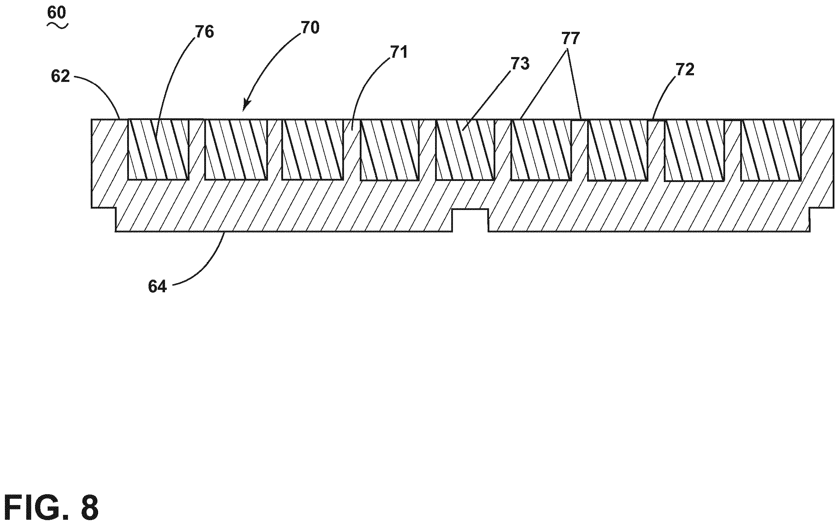

A set of sacrificial fillings 76 can be provided in the cavities 73 as shown in FIG. 8. Such sacrificial fillings 76 can occupy the cavities 73. Exposed surfaces 77 are then created by a top surface of the fillings 76 and the first surface 62 at the wall ends 72. Any suitable sacrificial material can be used for the fillings 76 including, but not limited to, wax or plastics.

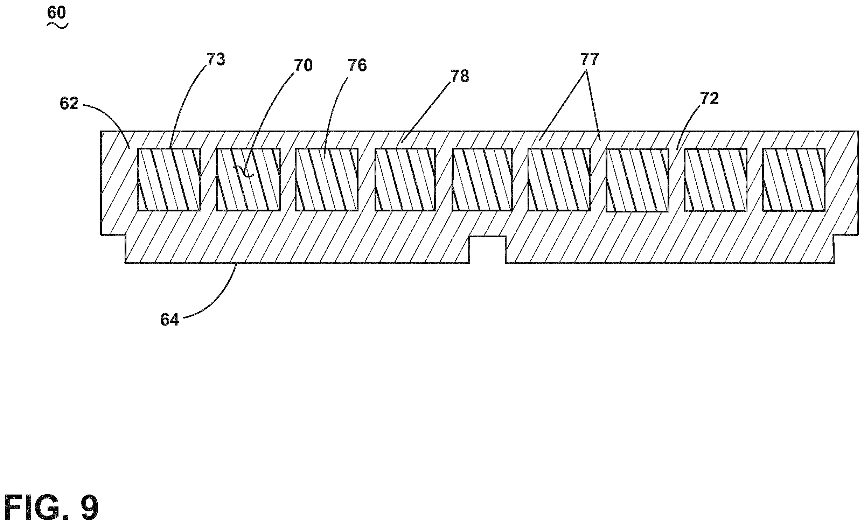

In FIG. 9, once the partially-defined cooling passages 70 are filled, the top of the fillings 76 can be metallized and nickel can be formed across the exposed surfaces 77 including the ends 72 and fillings 76, for example using electroforming methods, creating a metal cover wall 78 across the metal body 60 and closing off the cooling passages 70. It will be understood that any portion of the body that is not intended to have deposits can be masked.

The same material as the metal body 60 can be used for the cover wall 78; by way of non-limiting example, if the metal body 60 is nickel, the cover wall can also be nickel. Thus, in the illustration no distinction or separation has been shown between the metal body 60 and the cover wall 78. The deposition of material to form the cover wall 78 defines a remainder of the cooling passages 70 and allows for the heat exchanger or surface cooler 50 to not have joints, which can be prone to failure at high pressures.

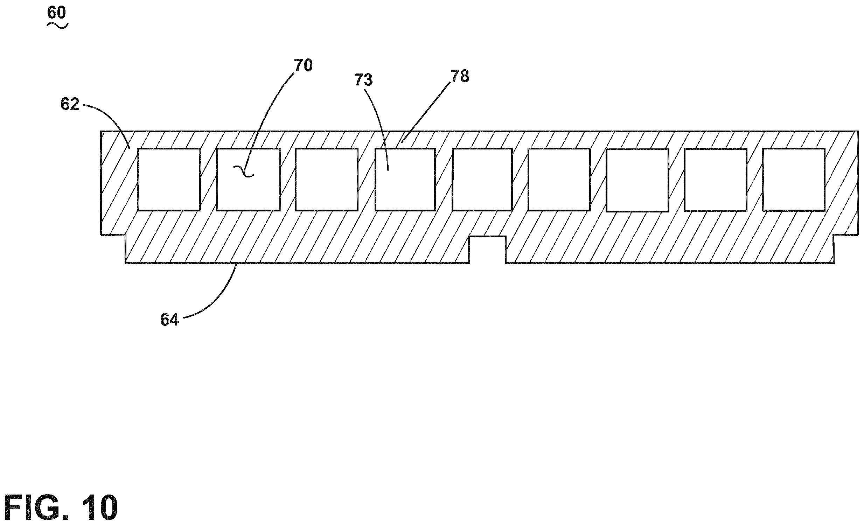

Turning to FIG. 10, once the cover wall 78 is formed over the cavities 73, the sacrificial fillings 76 (FIG. 9) can then be removed. The fillings 76 can be removed by any suitable means including, but not limited to, the application of heat or a fluid (for example, solvent or chemical) flush through the cooling passages 70.

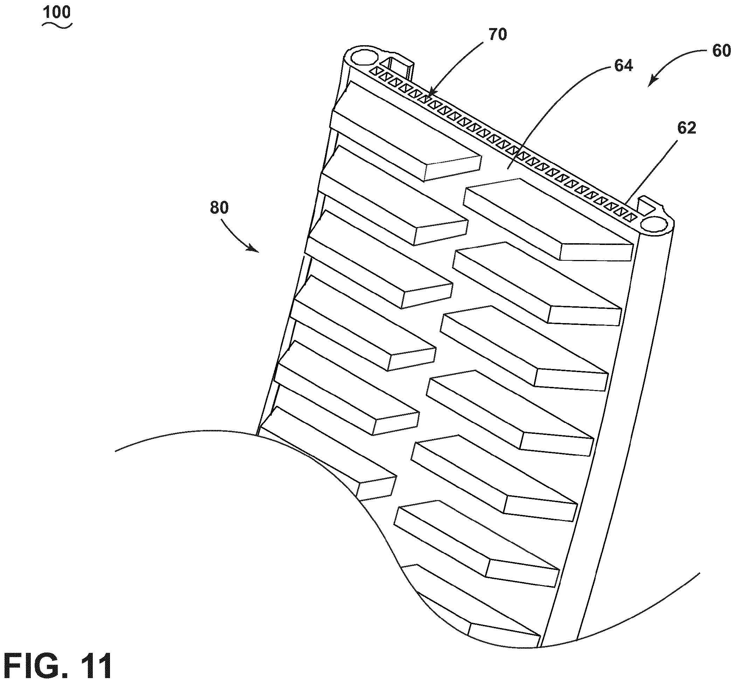

Further still, the set of fins 80 can be created from the ridges 90 using any suitable method including, but not limited to, skiving. FIG. 11 illustrates fins 80 on the surface cooler 50. After forming the fins 80, the metal body 60 may be trimmed in any suitable way such that at least a portion 100 of the heat exchanger or surface cooler 50 may be formed. During operation, fluids such as oil or compressor bleed air may be passed through the cooling passages 70, and heat from the fluid may be dissipated through the fins 80 to the air flowing past the fins 80.

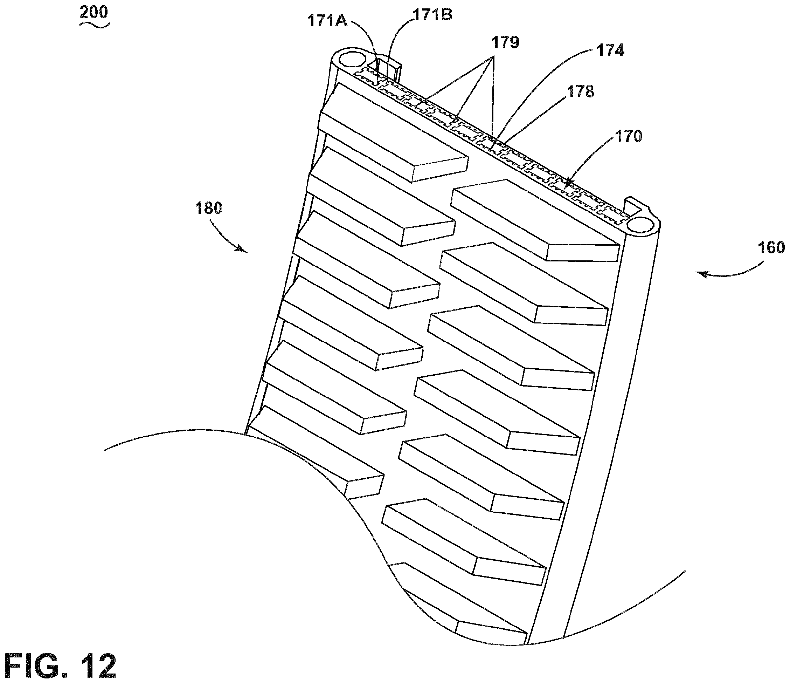

In the illustrated example of FIG. 6 the walls 71 formed in the metal body 60 had a linear or squared profile. It will be understood that any suitably shaped walls or cavities can be formed in the metal body 60. Further still, while the cavities 73 were completely filled with sacrificial material, it will be understood that the sacrificial filling 76 can have features on its exposed surface such that the cover wall 78 includes internal features. In this manner the heat exchanger 50 can be shaped or formed in any suitable manner with the cooling passages 70 or a portion of the cooling passages 70 having any suitable shape, profile, contour, and internal features. For example, FIG. 12 illustrates another portion 200 of a heat exchanger 150 having internal features. The heat exchanger 150 is similar to the heat exchanger 50; therefore, like parts will be identified with like numerals increased by 100, with it being understood that the description of the like parts of the first embodiment applies to the second embodiment, unless otherwise noted. The heat exchanger 150 also includes a metal body 160 with a set of cooling passages 170 having adjacent side walls 171A and 171B, an inner surface 174, and a metal cover wall 178. A set of heat transfer augmentation structures, illustrated herein as ribs 179, are included along the walls 171A and 171B, metal cover wall 178, or the inner surface 174. It should be understood that the ribs 179 can have any desired geometrical profile such as beveled, rounded, square, or dovetailed in non-limiting examples, and it can be appreciated that the introduction of ribs 179 along in the cooling passages 170 can increase the surface area of the cooling passages 170 for a more efficient heat transfer from the internal fluid to the metal body 160, and ultimately to the air flowing past the heat exchanger portion 200. While ribs are illustrated it will be understood that alternative heat transfer augmentation structures can be included such as divots, dimples, riblets, etc.

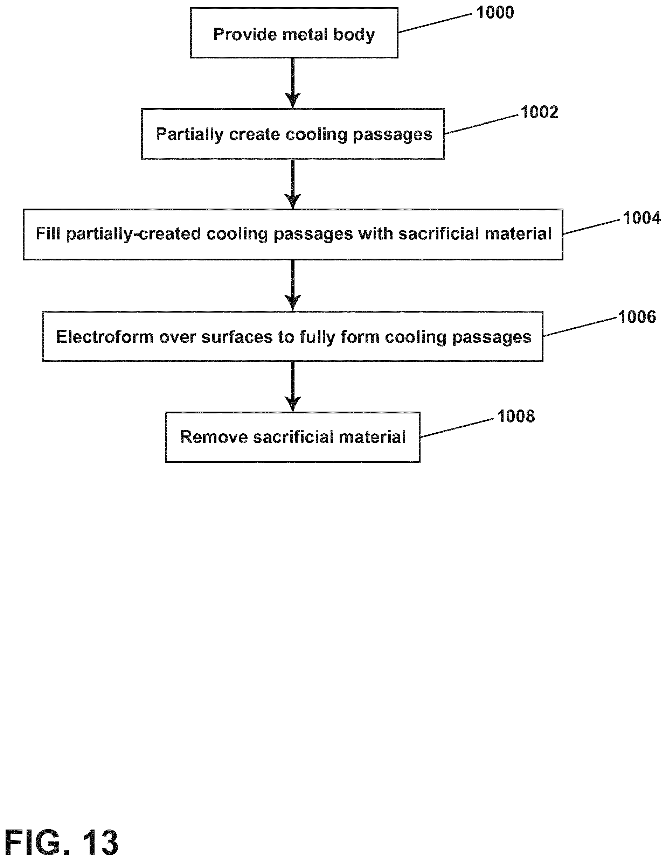

A method of forming the heat exchanger 50 is illustrated in a flowchart in FIG. 13. The nickel metal body 60 can be provided in step 1000. Nickel material can be removed from the first surface 62 of the metal body 60 by machining in step 1002, during which the set of partially-formed cooling passages 70 can be formed with open faces 75 within the metal body 60. In step 1004 the partially-created set of cooling passages can be filled with the sacrificial fillings 76 to form the exposed surfaces 77, and in step 1006 nickel can be electroformed over the exposed surfaces 77 to close the open faces 75 and fully form the set of cooling passages 70. The sacrificial fillings 76 can then be removed from the cooling passages 70 in step 1008.

It can be appreciated that the method of electroforming more durable metals such as nickel over the sacrificial fillings to fully enclose the cooling passages can provide for the creation of a heat exchanger that can withstand higher ambient temperatures or pressures than traditional heat exchangers made from the extrusion of relatively softer materials such as aluminum or that of heat exchangers having welded or fastened joints. It is contemplated that the heat exchangers of the present disclosure may be used in environments having temperatures of 150°C or higher and pressures of 0.7 MPa or more.

This written description uses examples to disclose the invention, including the best mode, and also to enable any person skilled in the art to practice the invention, including making and using any devices or systems and performing any incorporated methods. The patentable scope of the disclosure is defined by the claims.

## Claims

1. A method of forming a heat exchanger (50, 150), the method comprising:
providing (1000) a metal body (60, 160) having a first surface (62) and a second surface (64) opposite and spaced from the first surface (62);
removing (1002) material from the first surface (62) of the metal body (60, 160) to partially create a set of fluid cooling passages (70, 170) for carrying fluid to be cooled, the fluid cooling passages (70, 170) having open faces (75) within the metal body (60, 160);
filling (1004) the partially created set of fluid cooling passages (70, 170) via the open faces (75) with sacrificial material (76) such that the sacrificial material (76) forms an exposed surface (77);
forming (1006) a remainder of the set of fluid cooling passages (70, 170) by electroforming a layer of the same material as the metal body, such that the exposed surface (77) is covered and the open faces (75) are closed and a set of fully formed fluid cooling passages (70, 170) for the heat exchanger (50, 150) are defined;
removing (1008) the sacrificial material (76) from the set of fully formed fluid cooling passages (70, 170); and
forming fins (80, 180) on the second surface (64) of the metal body (60, 160);
wherein the heat exchanger (50, 150) is configured to operate in a high pressure environment of 0.7 MPa or more and a high temperature environment of 150°C or more;
wherein the material is removed from the metal body (60, 160) along the partially created fluid cooling passage (70, 170) in a non-uniform fashion such that at least one heat transfer augmentation structure (179) is formed along at least a portion (74, 78, 174, 178) of at least one of the multiple walls (71, 71A, 71B, 171A, 171B).

2. The method of claim 1, wherein removing material from the metal body (60, 160) comprises machining the metal body (60, 160) to partially create the set of fluid cooling passages (70, 170) within the metal body (60, 160).

3. The method of either of claim 1 or 2, wherein multiple walls (71, 71A, 71B, 171A, 171B) of a fluid cooling passage (70, 170) of the set of fluid cooling passages (70, 170) are created by removing material from the metal body (60, 160).

4. The method of any preceding claim, wherein the at least one heat transfer augmentation structure (179) increases a wetted surface area within the partially created fluid cooling passage (70, 170).

5. The method of any preceding claim, wherein the at least one heat transfer augmentation structure (179) comprises multiple heat transfer augmentation structures (179) formed along at least portions (74, 78, 174, 178) of a plurality of the multiple walls (71, 71A, 71B, 171A, 171B).

6. The method of any of any preceding claim, wherein filling the partially created set of fluid cooling passages (70, 170) comprises partially filling the partially created set of fluid cooling passages (70, 170).

7. The method of claim 6, wherein partially filling the partially created set of fluid cooling passages (70, 170) comprises leaving a cavity adjacent the exposed surface (77).

8. The method of either of claim 6 or 7, wherein forming the remainder of the set of fluid cooling passages (70, 170) comprises electroforming a metal wall (78, 178) over the exposed surface (77).

9. The method of any preceding claim, wherein the metal body (60, 160) comprises a nickel metal body (60, 160).

10. The method of any preceding claim, wherein the heat exchanger (50, 150) is an engine cooler (50, 150) having an arcuate body (60, 160).

11. The method of any preceding claim, wherein forming fins (80, 180) comprises skiving fins from material of the metal body forming the second surface.

12. The method of any preceding claim, further comprising mounting at least one manifold to an axial end of the metal body.

13. The method of claim 12, wherein mounting the at least one manifold comprises mounting the at least one manifold such that, in use, fluid passes through a plurality of the fluid cooling passage (70, 170) in a first direction, and passes through a remainder of the fluid cooling passages (70, 170) in a second direction opposite the first direction.

## Patentansprüche

1. Verfahren zum Ausbilden eines Wärmetauschers (50, 150), das Verfahren umfassend:
Bereitstellen (1000) eines Metallkörpers (60, 160), der eine erste Oberfläche (62) und eine zweite Oberfläche (64) gegenüber und beabstandet von der ersten Oberfläche (62) aufweist;
Entfernen (1002) von Material aus der ersten Oberfläche (62) des Metallkörpers (60, 160), um einen Satz von Fluidkühldurchgängen (70, 170) zum Tragen von zu kühlendem Fluid teilweise zu erzeugen, wobei die Fluidkühldurchgänge (70, 170) offene Flächen (75) innerhalb des Metallkörpers (60, 160) aufweisen;
derartiges Füllen (1004) des teilweise erzeugten Satzes von Fluidkühldurchgängen (70, 170) über die offenen Flächen (75) mit Opfermaterial (76), dass das Opfermaterial (76) eine freiliegende Oberfläche (77) ausbildet;
Ausbilden (1006) eines Rests des Satzes von Fluidkühldurchgängen (70, 170) durch ein derartiges Elektroformen einer Schicht aus dem gleichen Material wie der Metallkörper, dass die freiliegende Oberfläche (77) bedeckt ist und die offenen Flächen (75) geschlossen sind und ein Satz von vollständig ausgebildeten Fluidkühldurchgängen (70, 170) für den Wärmetauscher (50, 150) definiert ist;
Entfernen (1008) des Opfermaterials (76) aus dem Satz von vollständig ausgebildeten Fluidkühldurchgängen (70, 170); und
Ausbilden von Rippen (80, 180) auf der zweiten Oberfläche (64) des Metallkörpers (60, 160);
wobei der Wärmetauscher (50, 150) konfiguriert ist, um in einer Hochdruckumgebung von 0,7 MPa oder mehr und einer Hochtemperaturumgebung von 150 °C oder mehr betrieben zu werden;
wobei das Material aus dem Metallkörper (60, 160) entlang des teilweise erzeugten Fluidkühldurchgangs (70, 170) in einer nicht einheitlichen Weise derart entfernt wird, dass mindestens eine Wärmeübertragungserweiterungsstruktur (179) entlang mindestens eines Abschnitts (74, 78, 174, 178) von mindestens einer der mehreren Wände (71, 71A, 71B, 171A, 171B) ausgebildet ist.

2. Verfahren nach Anspruch 1, wobei das Entfernen von Material aus dem Metallkörper (60, 160) ein Bearbeiten des Metallkörpers (60, 160) umfasst, um den Satz von Fluidkühldurchgängen (70, 170) innerhalb des Metallkörpers (60, 160) teilweise zu erzeugen.

3. Verfahren nach Anspruch 1 oder 2, wobei mehrere Wände (71, 71A, 71B, 171A, 171B) eines Fluidkühldurchgangs (70, 170) des Satzes von Fluidkühldurchgängen (70, 170) durch das Entfernen von Material aus dem Metallkörper (60, 160) erzeugt werden.

4. Verfahren nach einem der vorstehenden Ansprüche, wobei die mindestens eine Wärmeübertragungserweiterungsstruktur (179) eine benetzte Oberfläche innerhalb des teilweise erzeugten Fluidkühldurchgangs (70, 170) erhöht.

5. Verfahren nach einem der vorstehenden Ansprüche, wobei die mindestens eine Wärmeübertragungserweiterungsstruktur (179) mehrere Wärmeübertragungserweiterungsstrukturen (179) umfasst, die entlang mindestens Abschnitten (74, 78, 174, 178) einer Vielzahl der mehreren Wände (71, 71A, 71B, 171A, 171B) ausgebildet sind.

6. Verfahren nach einem der vorstehenden Ansprüche, wobei das Füllen des teilweise erzeugten Satzes von Fluidkühldurchgängen (70, 170) das teilweise Füllen des teilweise erzeugten Satzes von Fluidkühldurchgängen (70, 170) umfasst.

7. Verfahren nach Anspruch 6, wobei das teilweise Füllen des teilweise erzeugten Satzes von Fluidkühldurchgängen (70, 170) ein Verlassen eines Hohlraums angrenzend an die freiliegende Oberfläche (77) umfasst.

8. Verfahren nach Anspruch 6 oder 7, wobei das Ausbilden des Rests des Satzes von Fluidkühldurchgängen (70, 170) das Elektroformen einer Metallwand (78, 178) über der freiliegenden Oberfläche (77) umfasst.

9. Verfahren nach einem der vorstehenden Ansprüche, wobei der Metallkörper (60, 160) einen Nickelmetallkörper (60, 160) umfasst.

10. Verfahren nach einem der vorstehenden Ansprüche, wobei der Wärmetauscher (50, 150) ein Motorkühler (50, 150) ist, der einen bogenförmigen Körper (60, 160) aufweist.

11. Verfahren nach einem der vorstehenden Ansprüche, wobei das Ausbilden von Rippen (80, 180) ein Schälen von Rippen aus Material des Metallkörpers umfasst, der die zweite Oberfläche ausbildet.

12. Verfahren nach einem der vorstehenden Ansprüche, ferner umfassend ein Montieren mindestens eines Verteilers an einem axialen Ende des Metallkörpers.

13. Verfahren nach Anspruch 12, wobei das Montieren des mindestens einen Verteilers das derartige Montieren des mindestens einen Verteilers umfasst, dass bei Verwendung Fluid durch eine Vielzahl des Fluidkühldurchgangs (70, 170) in eine erste Richtung strömt und durch einen Rest der Fluidkühldurchgänge (70, 170) in eine zweite Richtung entgegengesetzt der ersten Richtung strömt.

## Revendications

1. Procédé de formation d'un échangeur de chaleur (50, 150), le procédé comprenant :
la fourniture (1000) d'un corps métallique (60, 160) ayant une première surface (62) et une seconde surface (64) opposée et espacée de la première surface (62) ;
le retrait (1002) de matériau de la première surface (62) du corps métallique (60, 160) pour créer partiellement un ensemble de passages de refroidissement de fluide (70, 170) permettant de transporter du fluide à refroidir, les passages de refroidissement de fluide (70, 170) ayant des faces ouvertes (75) à l'intérieur du corps métallique (60, 160) ;
le remplissage (1004) de l'ensemble partiellement créé de passages de refroidissement de fluide (70, 170) par le biais des faces ouvertes (75) avec un matériau sacrificiel (76) de telle sorte que le matériau sacrificiel (76) forme une surface exposée (77) ;
la formation (1006) d'un reste de l'ensemble de passages de refroidissement de fluide (70, 170) par électroformage d'une couche du même matériau que le corps métallique, de telle sorte que la surface exposée (77) est recouverte et que les faces ouvertes (75) sont fermées et qu'un ensemble de passages de refroidissement de fluide (70, 170) entièrement formés pour l'échangeur de chaleur (50, 150) sont définis ;
le retrait (1008) du matériau sacrificiel (76) de l'ensemble de passages de refroidissement de fluide (70, 170) entièrement formés ; et
la formation d'ailettes (80, 180) sur la seconde surface (64) du corps métallique (60, 160) ;
dans lequel l'échangeur de chaleur (50, 150) est configuré pour fonctionner dans un environnement haute pression de 0,7 MPa ou plus et un environnement à haute température de 150 °C ou plus ;
dans lequel le matériau est retiré du corps métallique (60, 160)
le long du passage de refroidissement de fluide (70, 170) partiellement créé d'une manière non uniforme de telle sorte qu'au moins une structure d'augmentation de transfert de chaleur (179) est formée le long d'au moins une partie (74, 78, 174, 178) d'au moins l'une des multiples parois (71, 71A, 71B, 171A, 171B).

2. Procédé selon la revendication 1, dans lequel le retrait de matériau du corps métallique (60, 160) comprend l'usinage du corps métallique (60, 160) pour créer partiellement l'ensemble de passages de refroidissement de fluide (70, 170) à l'intérieur du corps métallique (60, 160).

3. Procédé selon la revendication 1 ou 2, dans lequel de multiples parois (71, 71A, 71B, 171A, 171B) d'un passage de refroidissement de fluide (70, 170) de l'ensemble de passages de refroidissement de fluide (70, 170) sont créées en retirant du matériau du corps métallique (60, 160).

4. Procédé selon l'une quelconque revendication précédente, dans lequel l'au moins une structure d'augmentation de transfert de chaleur (179) augmente une aire de surface mouillée à l'intérieur du passage de refroidissement de fluide (70, 170) partiellement créé.

5. Procédé selon l'une quelconque revendication précédente, dans lequel l'au moins une structure d'augmentation de transfert de chaleur (179) comprend de multiples structures d'augmentation de transfert de chaleur (179) formées le long au moins de parties (74, 78, 174, 178) d'une pluralité des multiples parois (71, 71A, 71B, 171A, 171B).

6. Procédé selon l'une quelconque revendication précédente, dans lequel le remplissage de l'ensemble partiellement créé de passages de refroidissement de fluide (70, 170) comprend le remplissage partiel de l'ensemble partiellement créé de passages de refroidissement de fluide (70, 170).

7. Procédé selon la revendication 6, dans lequel le remplissage partiel de l'ensemble partiellement créé de passages de refroidissement de fluide (70, 170) comprend le fait de laisser une cavité adjacente à la surface exposée (77).

8. Procédé selon la revendication 6 ou 7, dans lequel la formation du reste de l'ensemble de passages de refroidissement de fluide (70, 170) comprend l'électroformage d'une paroi métallique (78, 178) sur la surface exposée (77).

9. Procédé selon l'une quelconque revendication précédente, dans lequel le corps métallique (60, 160) comprend un corps métallique (60, 160) en nickel.

10. Procédé selon l'une quelconque revendication précédente, dans lequel l'échangeur de chaleur (50, 150) est un refroidisseur de moteur (50, 150) ayant un corps arqué (60, 160).

11. Procédé selon l'une quelconque revendication précédente, dans lequel la formation d'ailettes (80, 180) comprend le drayage d'ailettes à partir de matériau du corps métallique formant la seconde surface.

12. Procédé selon l'une quelconque revendication précédente, comprenant en outre le montage d'au moins un collecteur sur une extrémité axiale du corps métallique.

13. Procédé selon la revendication 12, dans lequel le montage de l'au moins un collecteur comprend le montage de l'au moins un collecteur de telle sorte que, lors de l'utilisation, du fluide passe à travers une pluralité du passage de refroidissement de fluide (70, 170) dans un premier sens, et passe à travers un reste des passages de refroidissement de fluide (70, 170) dans un second sens opposé au premier sens.
